(19) Europäisches Patentamt / European Patent Office / Office européen des brevets

(11) **EP 2 045 697 A1**

(12) # EUROPEAN PATENT APPLICATION

(43) Date of publication:
**08.04.2009 Bulletin 2009/15**

(51) Int Cl.:
***G06F 3/041*** (2006.01)

(21) Application number: **07370020.5**

(22) Date of filing: **05.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **UNIVERSITE DES SCIENCES ET TECHNOLOGIES DE LILLE**
**59655 Villeneuve-d'Ascq Cedex (FR)**
• **UNIVERSITY OF TORONTO**
**Toronto, Ontario M4L 3K4 (CA)**

(72) Inventors:
• **Casiez, Géry**
**59286 Roost Warendin (FR)**
• **Vogel, Daniel**
**Sackville, NB**
**E4L 4J9 (CA)**

(74) Representative: **Matkowska, Franck**
**Matkowska & Associés**
**9 Rue Jacques Prévert**
**59650 Villeneuve d'Ascq (FR)**

(54) **Isotonic/elastic touch-sensitive input device**

(57)    The input device (1) comprises a touch-sensitive surface (10a) forming at least one isotonic input area and elastic abutment means (11) forming at least one passive elastic input area that is adjacent to the isotonic input area. A position control is performed in the isotonic input area and a rate control is performed in the elastic area.

FIG.1

EP 2 045 697 A1

## Description

## Technical field

The present invention relates to a novel touch-sensitive input device, like for example input devices commonly designated 'touchpads', and that can be used in the computing field as pointing device or for manipulating objects in a virtual environment. This novel touch-sensitive input device is more particularly, but not only, suitable for portable electronic devices, such as for example laptop computers and handheld electronic devices (PDA, mobile phone, handheld pen tablet, etc...)

## Prior art

### Isotonic position control and elastic rate control

Input devices can be classified in three classes (isotonic, isometric and elastic) as defined in publication: Zhai, S. Human Performance in Six Degree of Freedom Input Control. PhD thesis, University of Toronto, 1995. Isotonic devices are free-moving and use position for input. Isometric devices do not perceptibly move and use force for input. In between isotonic and isometric devices are elastic devices, where resistance increases with displacement. Elastic devices can use either position or force for input.

With any class of input device, there are different ways to map to output, the two most popular being position control (zero-order mapping function) and rate control (first-order mapping function). Zhai found that isotonic devices are better suited to position control whereas isometric and elastic devices should use rate control. The latter require a self-centering mechanism - a way for the device to return to a neutral rate control state - that is difficult to achieve with isotonic devices. Rate control maps input to a velocity vector and moves the display pointer in that direction and speed. Position control maps device input to an output position.

Absolute position control assigns a unique output position to every input position [Buxton, W. Lexical and Pragmatic Considerations of Input Structures. Comp. Graphics, 17,1 (1983), 31-37 & Card, S. K., Mackinlay, J. D., and Robertson, G. G. A morphological analysis of the design space of input devices. ACM Trans. Inf. Syst., 9, 2 (1991), 99-122]. This is typically done when the input and output spaces are coincident, like on a pen-input display.

Relative position control uses a displacement vector from an initial input position to the current input position. The current output position is calculated with the vector and a corresponding initial output position. The definition of this initial input position is achieved by clutching, where the input stream is suspended as the device is repositioned at a new initial input position.

A mapping function uses Control Display Gain (CD gain) to scale the relative displacement vector. Jellinek et al. [Jellinek, H. and Card , S. Powermice and user performance In. Proc. of CHI'90, 1990, pp. 213-220], Accot et al. [Accot, J., and Zhai, S. Scale effects in steering law tasks. In Proc. of CHI'01, 2001, pp. 1-8] and Zhai [Zhai, S. Human Performance in Six Degree of Freedom Input Control. PhD thesis, University of Toronto, 1995] found that performance degraded at low and high CD gain levels. This may be partially due to limits of human motor control and limited device resolution preventing selection of every pixel at high levels, and increased clutching at low levels.

### Touchpads

Touchpads (also called trackpads) are relative position control pointing devices that are now widely used as pointing devices in portable electronic devices such as laptop computers, mobile phones, PDA or the like. Touchpads can also be used in digitizing tablets, and for example in handheld pen tablets.

A touchpad generally comprises a touch-sensitive surface that forms the input area and is used to detect localized pressure or touch at its surface. When a user touches the touch-sensitive surface of the touchpad with a finger, or with a pointing tool (stylus or the like), the circuitry associated with the touch-sensitive surface determines and reports to the attached computer system or a computer-controlled device the coordinates of the location touched. Different known technologies for the touch-sensitive surface are used to date, and are described for example in the following US patents : US 5,521,336 ; US 4,529,959 ; US 4,455, 450 ; US 4,736,190 ; US 4,529,959 ; US 4,455,450.

### Clutching issue

A relative position control input device, like a touchpad or a mouse, will perform better than a rate control input device, such as for example a joystick [Card, C., English, W., and Burr, B. Evaluation of mouse, rate controlled isometric joystick, step keys, and text keys for text selection on a crt. Ergonomics, 21 (1978), 601-613 & Douglas, A. and Mithal, A. The effect of reducing homing time on the speed of a finger-controlled isometric pointing device. In Proc. of CHI'94, 1994, pp. 411-416 ]. In particular, relative position control input device, like touchpad or a mouse, enable to achieve a very precise selection (or pointing).

However, a potential issue with relative position control devices is when clutching (i.e. the momentary recalibration to avoid running out of input area) becomes more frequent, taking additional time.

The amount of clutching is dependent on the maximum area of unconstrained physical movement, referred therein as "operating range", target distance and mapping function. A small operating range causes more clutching with large target distances, and the maximum operating range is dependent on the mapping function.

Recently, the resolution of digital displays has increased significantly, while the input area (i.e. touch-sensitive surface of the touchpad) remains fixed. This tendency renders the clutching issue more critical. For example, laptops are available with 38cm displays (diagonal dimension) with resolutions in excess of 1400x1050 pixels, yet the touchpad input area remains at about 4cm. With wall-sized displays, the difference is even greater.

One solution to reduce clutching in relative position control input device, like touchpads, is to increase the CD gain. But with higher CD gain, the precision performance of the input device is unfavorably decreased, especially in case of shorter movements.

## Objective of the invention

The objective of the invention is to improve the existing relative position control touch-sensitive input device, in order to reduce the clutching without deteriorating the selection precision by means of user's finger or a user's pointing tool (stylus or the like).

## Summary of the invention

This objective is achieved by the input device of claim 1.

The input device of the invention comprises a touch-sensitive surface forming at least one isotonic input area (ZI) and elastic abutment means forming at least one passive elastic input area (ZE) that is adjacent to the isotonic input area (ZI).

Outside the area covered by the elastic abutment means at rest, the touch-sensitive surface forms an isotonic input area for a user's finger or a user's pointing tool (stylus or the like). The elastic abutment means at rest delimit a passive elastic input area that is adjacent to the isotonic area. The terms "passive elastic area" mean an area wherein a passive elastic force is applied on the user's finger or a user's pointing tool, said passive elastic feedback force being opposed to the displacement of the user's finger or a user's pointing tool (without blocking it) and having an intensity that increases with the distance of penetration of the user's finger or a user's pointing tool in the elastic area.

## Brief description of the drawings

Other characteristics and advantages of the invention will appear more clearly upon reading the following detailed description that is given by way of non-limiting and non-exhaustive example of the invention, and with reference to the attached drawings:

- Figure 1 shows drawings (a), (b), (c) of three examples of portable electronic apparatus comprising an input device of the invention;
- Figure 2 is a top view of a first embodiment of an input device of the invention;
- Figure 3 is a cross-sectional view of the input device of figure 2 in plane III-III;
- Figure 4 is a diagram illustrating electronic means used for controlling the position of a cursor in a virtual environment from the current position data reported by the touch-sensitive sensor of the input device;
- Figure 5 is a schematic drawing of the input device of the invention when controlled with straightforward mapping functions,
- Figure 6 is a schematic drawing illustrating how, a real circular object, like a dinner plate, would rotate and translate when pulled by a string attached to its edge;
- Figure 7 is a schematic drawing of the input device of the invention when controlled with a novel mapping function of the invention;
- Figure 8 is a top view of a second embodiment of an input device of the invention
- Figure 9 is a cross-sectional view top view of a third embodiment of an input device of the invention ,
- Figure 10 is a diagram illustrating electronic means used for controlling a cursor in a virtual environment from the current position data reported by the touch-sensitive sensor of the input device and from a force exerted on the elastic abutment means and detected by force sensing means.

## Detailed description

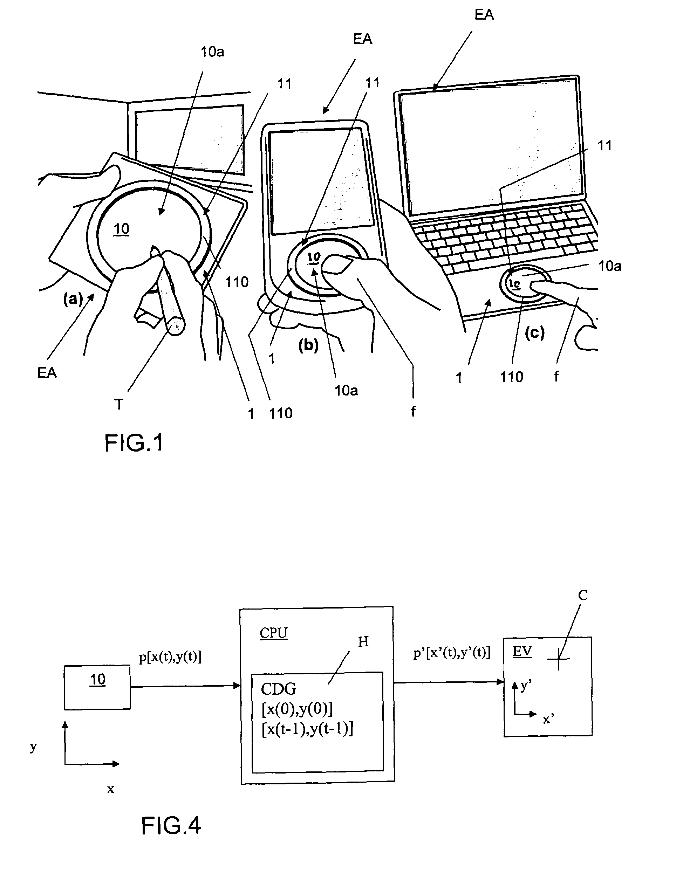

Figure 1 shows three different examples of electronic apparatus EA comprising a 2D touch-sensitive input device 1 of the invention. On figure 1a, the electronic apparatus EA is a handheld pen tablet. On figure 1b, the electronic apparatus EA is a PDA. On figure 1 c, the electronic apparatus EA is a laptop computer. These examples are however not exhaustive. The touch-sensitive input device 1 can be integrated in other types of portable apparatus (eg. mobile phone, etc...), and can be used also as pointing device in any computer system or computer-controlled apparatus. The apparatus comprising the input device of the invention is not necessary portable.

In some applications, the input device can be used as pointing device. In other applications, the device can be used for pointing and view translation. A typical example is with small screen devices like PDA where the view of a webpage, for instance, cannot fit on the entire display. In that case, the control of the pointer displayed on screen can be done using the isotonic area (ZI) of the input device, and the view can be translated using the elastic area (ZE) of the input device. When a user enters the elastic area (ZE) with his finger or with a pointing tool, the view is translated according to the direction and speed corresponding to the force vector applied.

In the particular embodiments of figure 1 to 3, the 2D touch-sensitive input device 1 comprises a touch-sensitive sensor 10 having an upper surface 10a forming a touch-sensitive surface. In this particular embodiment, the touch-sensitive surface 10a forms an input disk-shaped area.

The technology used for the touch-sensitive sensor 10 is not important for practicing the invention, and can be any known touch-sensitive technology, in particular any known touch-sensitive technology used in the filed of touchpad, that enables to detect a localized pressure or touch on the touch-sensitive surface 10a. Said localized pressure or touch is for example being applied on the touch-sensitive surface 10a by mean of the user's finger f ( figure 1 b and 1 c) or by mean of any pointing tool T (figure 1 a), such as for example a stylus or the like.

The 2D touch-sensitive input device 1 further comprises elastic abutment means 11 that are mounted above the touch-sensitive surface 10a. In the particular embodiment of figures 1 to 3, the elastic abutment means 11 are constituted by a fixed abutment 110 that is elastically deformable. More particularly, this abutment 110 is an annular-shaped toroid that can be locally and elastically deformed when a localized radial pressure is exerted on the internal face 110a of the toroid. This toroid can be a ring made of an elastically deformable foam type material or a ring made of elastomeric material, such as for example rubber. This toroid 110 can be also for example an air chamber made of an air-filled hermetic cushion ; the air in the chamber 110 may in a more general manner be replaced by any suitable fluid (gas or liquid) providing the required elastic properties to the toroid 110.

The central area ZI of the touch-sensitive surface 10a that is delimited by the elastic abutment 110 at rest (i.e. when the elastic abutment 110 is not deformed) constitutes an isotonic input area. The annular peripheral area ZE of the touch-sensitive surface 10a, located underneath the elastic abutment 110 at rest, constitutes a passive elastic input area.

In operation, when the user's finger f or pointing tool T is positioned in the central isotonic area (ZI), it can slide freely on the touch-sensitive surface 10a without undergoing forces opposed to its displacement (with the exception of low friction forces that are negligible). When the user's finger f or pointing tool T reaches the elastic abutment 110 (i.e. the boundary between the isotonic area (ZI) and the elastic abutment 110), and penetrates in the elastic peripheral area (ZE), the elastic abutment 110 exerts on the user's finger f or pointing tool T a reverse elastic feedback force F that is opposed to the radial displacement thereof. In this particular embodiment of the invention example, this feedback force F is substantially a radial force oriented substantially toward the centre of the disk-shaped touch-sensitive surface 10a. The norm F of this feedback force increases with the radial distance (r) of penetration in the elastic area (ZE) of the user's finger f or pointing tool T. This passive elastic feedback force is a function of the mechanical properties of the elastic material in the case of a ring 110 made of elastic material, or is a function of the inflation pressure in the case of a chamber filled with a fluid (gas or liquid).

Isotonic area (ZI) / position control - Elastic area (ZE) / rate control

Referring to figure 4, the input device 1 comprises a control processing unit (CPU). This control processing unit (CPU) can be the control processing unit of the electronic apparatus EA or can be a control processing unit (CPU) dedicated only to the control of the input device 1.

In operation, the touch-sensitive sensor 10 reports to this control processing unit (CPU) position data [for example coordinates (x(t), y(t))] defining the instantaneous position p of the localized pressure or touch detected by the sensor 10 on its touch-sensitive surface 10a. These position data (x(t), y(t)) are defined in a 2D real space (X, Y) attached to the touch-sensitive sensor.

The control processing unit (CPU) is programmed for managing a virtual environment (EV) that is for example dynamically displayed on a screen. This virtual environment (EV) contains, for example, a virtual object (C), hereafter called cursor or pointer, associated with the user's finger f or user's tool T in the real environment.

More particularly, the control processing unit (CPU) is programmed to execute a mapping function H that computes the current output position p'(x'(t), y'(t)) of the cursor or pointer (C) in a virtual space (X', Y') of the virtual environment (EV), from an initial input position (x (0), y(0)) and from a relative displacement vector calculated from the previous position [(x(t-1), y(t-1)) ] and current position (x(t), y(t)) detected by the sensor 10 in the 2D real space (X, Y). The initial input position (x(0), y(0)) corresponds to the new initial input position of the finger f or tool T after clutching, i.e. when the input stream is suspended and the finger f or tool T is repositioned on the touch-sensitive surface 10a at a new position. This mapping function H uses a control display gain (CDG) to scale the relative displacement vector.

In a particular embodiment of the invention, the control processing unit (CPU) is programmed to execute two different mapping functions: one mapping function $(H_I)$ is used in the isotonic area (ZI), and one mapping function $(H_E)$ is used in the elastic area (ZE). In order to achieve a better control:

- the mapping function $(H_I)$ used in the isotonic area (ZI) is preferably a zero-order function ; a position control is thus performed in the isotonic area (ZI) ;
- the mapping function $(H_E)$ used in the elastic area (ZE) is preferably a first-order function ; a rate control is thus performed in the elastic area (ZE).

In the case of a zero-order mapping function (position control), the relationship between the input parameter (p) and the output parameter (p') is a simple relationship of proportionality. The real displacement of user's finger f or user's tool T detected by sensor 10 is translated in the virtual environment (EV) by an homothetic displacement defined by the control display gain (CDG).

In the case of a first-order mapping function (rate control), the relationship between the input parameter (p) and the output parameter (p') is of the integral type; in this case, The real displacement of user's finger f or user's tool T detected by sensor 10 is interpreted in terms of speed in the virtual environment (EV).

It has been tested and demonstrated experimentally by the inventors that this hybrid control (position control in the isotonic area (ZI) and rate control in the passive elastic area (ZE) has performance advantage over a pure position control when faced with significant clutching. Actually, the time that is needed to reach a target in the virtual environment with this hybrid control (position control / rate control) is faster than the time needed when only a position control is performed and no elastic abutment is being used. This hybrid control (position control in the isotonic area (ZI) and rate control in the passive elastic area (ZE) actually enables to significantly reduce the clutching, and thereby decreases the time wasted by clutching operations. This advantage is more efficient for reaching far target in the virtual environment. It has to be underlined that this improvement (clutching reduction and time saving for reaching a target) does not impair the pointing precision, because the control display gain (CDG) is not modified.

Straightforward Mapping Functions

In the prior art [Dominjon, L., Lécuyer, A., Burkhardt, J.M., Andrade-Barroso, G., and Richir, S. The bubble technique: Interacting with large virtual environments using haptic devices with limited workspace. In Proc. of IEEE World Haptics, 2005, pp. 639-640], Dominjon et al disclosed a 3D hybrid position-rate control technique that use elastic feedback with a large Virtuose 6 DOF force feedback device. A spherical volume is simulated in physical space and visualized as a transparent sphere on the display. When the input point is inside the volume, movement is by position control with constant CD gain. When the input is moved beyond the spherical volume, the device uses rate control with elastic feedback.

The Dominjon et al' straightforward mapping functions (disclosed for 3D) can be adapted to 2D, and used for controlling the 2D touch -sensitive input device 1. In such a case, Dominjon et al.'s mappings (Equations (1) and (2)) introduce however trajectory and speed discontinuities when transitioning from isotonic to elastic zones. In Equation 1, the feedback force F is proportional to the distance between end effector P and the isotonic-to-elastic boundary $N$ given spring stiffness $k$. The force direction is always radial with $\vec{r}$, the radial direction from the centre of the isotonic circle to P. In Equation 2, the input control rate V is a third degree polynomial with a scaling constant K. Dominjon et al.'s implementation set k = *200 N.m$^{-1}$* and K = *0.0$_3$ N$^{-3}$.s$^{-1}$*.

$$(1) \qquad \vec{F} = -k \cdot \left(P - N\right) \cdot \vec{r}$$

$$(2) \qquad \vec{V} = K \cdot F^3 \cdot \vec{r}$$

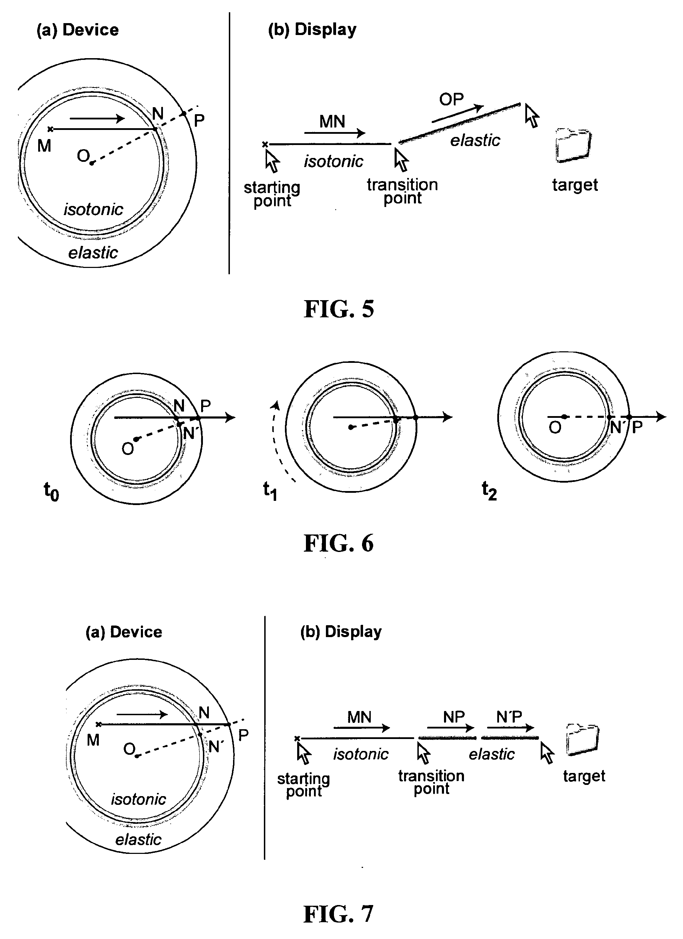

This formulation introduces a trajectory discontinuity as long as the isotonic trajectory is not radial to the isotonic circle, as illustrated on figure 5.

Referring to figure 5 : (a) Using the device 1 to select a distant target, the user moves his finger f or pointing tool T from position M to N in the isotonic zone, then transitions to the elastic zone ; (b) On the display, the pointer will deviate from its trajectory of MN at the transition point, instantly changing to OP because the elastic zone always uses a direction vector radial from central point O through transition point N to point P (corresponding to the current position of the user's finger f or pointing tool T in the elastic zone).

The pointer (on the display) will jump to the radial trajectory defined by Equation (2) the moment it enters the rate control zone, regardless of its initial path (Figure 5). A speed discontinuity also occurs because according to equation (1), the initial force in the elastic zone will be zero, and thus the velocity will be set to zero with equation (2).

It is however important to achieve a continuity of speed, since a noticeable drop could affect the pre-planned trajectory, impairing user performance [Plamondon, R., and Alimi, A. M. Speed/accuracy tradeoffs in target-directed movements. Behavioral and Brain Sciences, 20, 1997, 279-349].

Novel Mapping Functions

In order to solve this problem of trajectory and speed discontinuities, the invention further proposes novel mapping functions that enable to achieve a smooth transition from isotonic position control to elastic rate control.

The mapping functions of the invention enable to achieve a consistent trajectory by rotating and translating the isotonic-to-elastic boundary after transition ; the transition velocity is also smoothed by mixing pre- and post-transition velocities. At first it appears that simply using the same isotonic direction vector (MN in Figure 5) as the direction vector $\vec{r}$ for the rate in Equation (2) is the solution. However, the pre-planned trajectory direction in the isotonic zone is not always correct and the user may want to adjust it in the elastic zone. This can be done by saving the exit point N and translating the pointer according to NP. However any change in P produces an important variation in the pointer direction.

To create a consistent trajectory, the isotonic-to-elastic boundary zone is translated and rotated as the user penetrates the elastic zone. This translation and rotation of the isotonic-to-elastic boundary zone is performed smoothly, by giving mass and inertia to the boundary zone using a simple physical simulation to align it with the isotonic direction vector. The intuition behind this technique is to consider how a real circular object, like a dinner plate, would rotate and translate when pulled by a string attached to its edge (Figure 6). When the user exits the isotonic zone, the exit point N is saved. In the elastic zone, the vector from N to the end-effector P gives the force direction applied by the user on the plate. By applying angular momentum, N rotates smoothly to N' and the force direction vector becomes radial to *O*, the centre of the isotonic-to-elastic boundary. Past user interface researchers have utilized similar physics-based rotation and translation functions, but for rotating graphical objects with direct manipulation [Kruger, R., Carpendale, S., Scott, S. D. and Tang, A. Fluid integration of rotation and translation. In Proc. of CHI '05, 2005, pp. 601-610], and smoothly rotating or peeling back GUI windows [Beaudouin-Lafon, M. Novel interaction techniques for overlapping windows. In Proc. of UIST '01, 2001, pp. 153-154].

Referring to figure 7 : (a) Using the device 1, the user moves his finger f or pointing tool T from M to N in the isotonic zone, then transitions to the elastic zone ; (b) On the display, the initial trajectory NP smoothly changes to *N'P* by applying angular momentum.

The novel mapping functions of the invention compute the angular speed (of the virtual pointer) at the entrance of the elastic area (ZE) (i.e. when the user's finger f or pointing tool T enters into the elastic area ZE) by using the theorem of angular momentum (Equation (3)). $\overline{\omega}$ is the rotation vector of the isotonic zone and J is its moment of inertia with a friction term ($\mu$) added to avoid instability. The translation is proportional to the vector NP.

The inventors found that using a mass of *1Kg* and a friction coefficient of $3*10^{-3}\ N.s.rad^{-1}$ smoothes out the trajectory nicely without the sharp direction changes.

$$(3) \qquad J\frac{d\overline{\omega}}{dt} - \mu\,\overline{\omega} = \overline{ON} \wedge \overline{NP}$$

In a particular embodiment, in order to smooth the transition velocity, the novel mapping functions of the invention compute mixed velocity $V_t$ in he elastic area (ZE) by using Equation (4), where $V_o$ is the linear speed of the user's finger (f) or pointing tool (T) at the exit of the isotonic area (ZI), *t* is the time after the isotonic exit, A is a constant to adjust the mixing time (for example *A=0.3s)* and K is a constant.

$$(4) \qquad V_t = \left(V_0 \cdot e^{-At} + K \cdot NP \cdot (1 - e^{-At})\right)\frac{\overline{NP}}{NP}$$

The invention is not limited to the particular elastic abutment 110 of the embodiment of figure 1 to 3, but encompasses more generally input devices 1 comprising any elastic means 11 that form a passive elastic input area (ZE) that is adjacent to an isotonic area formed by the touch-sensitive surface 10a.

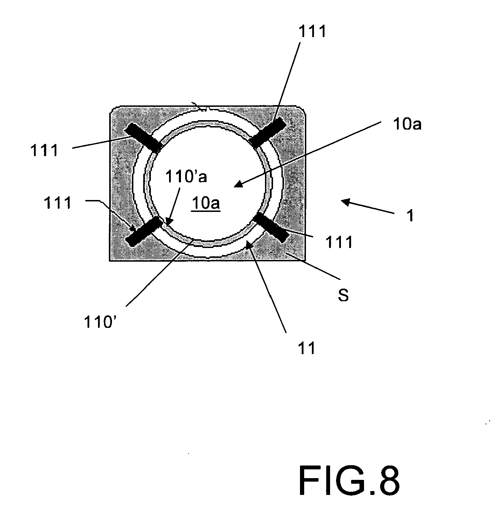

For example, figure 8 shows another embodiment of an input device 1 of the invention. In this embodiment, the touch-sensitive sensor 10 is encased in a support S. The elastic abutment means 11 comprise a mobile rigid abutment 110' ( in the form a circular ring) mounted above the touch-sensitive surface 10a of the sensor 10, and elastic means 111 for fastening the abutment 110' to the support S and for elastically moving the abutment 110' back to its rest position of figure 8. For example, these elastic means are constituted by four rubber bands 111 fixed at one end on the periphery of the abutment 110' and at the other end on the support S. When the user exerts a radial pressure on the internal periphery 110'a of the abutment 110' by means of his finger of by means of a pointing tool (stylus or the like), the abutment 110 is slightly moved in a plan parallel to the touch-sensitive surface 10a, and the elastic abutment means (110', 111) exert on the finger or pointing tool an elastic feedback force. When the user releases the pressure (for example when clutching occurs), the abutment 110' is forced back into its rest position of figure 8 by the elastic means 111.

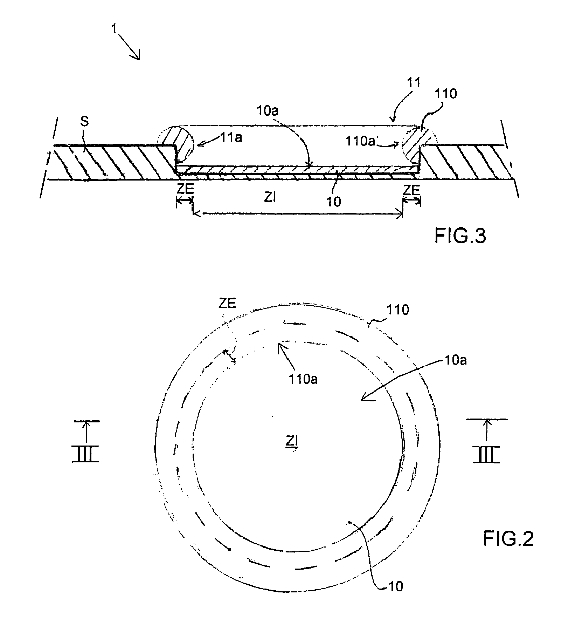

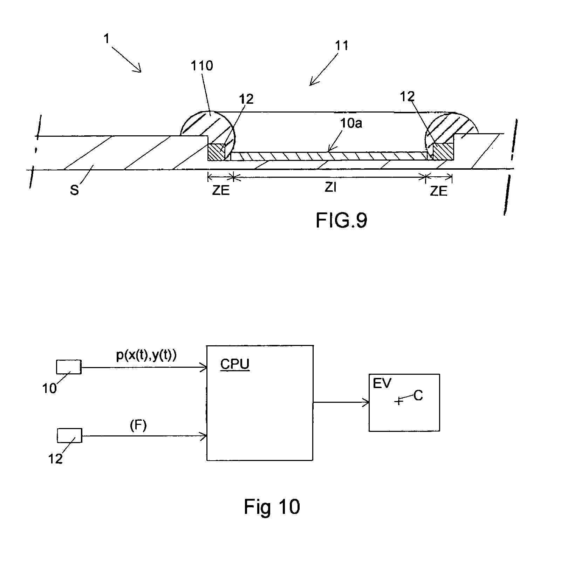

Figure 9 shows another embodiment of an input device 1 of the invention, wherein the elastic abutment means 11 are not mounted above the touch-sensitive surface 10a, but are mounted on the periphery of the touch-sensitive surface 10a. In such an embodiment, and in contrast for example with the embodiment of figure 3, a detection of the current position of the user's finger f or pointing tool T in the elastic area (ZE) can not be performed by the touch-sensitive surface. In such a case, the input device 1 comprise sensing means 12, like strain gage(s), for sensing the force exerted by the user's finger f or pointing tool T on the elastic abutment means 11, in a plane substantially parallel to the touch-sensitive-surface 10a. In reference to the diagram of figure 10, these sensing means 12 report to the control program unit (CPU) the current force (F) exerted by the user's finger f or pointing tool T on the elastic abutment means 11, and the CPU performs the rate control in the elastic area (ZE) from this force (F).

One skilled in the art will also acknowledge that such sensing means 12 can be also used similarly in the embodiment of figure 3 or in the embodiment of figure 8, for measuring and reporting to the CPU the current force (F) exerted by the user's finger f or pointing tool T on the elastic abutment means 11 of these embodiments.

In another embodiment of the invention, the input device 1 can also comprise additional means for detecting the current position of the user's finger f or pointing tool T in the elastic input area (ZE), and for reporting this current position to the CPU. For example, the embodiment of figure 9 can be modified by using a second touch-sensitive sensor (different from the first touch-sensitive sensor 10) and having a touch-sensitive surface that is positioned underneath the elastic abutment 110.

## Claims

1.  An input device (1) comprising a touch-sensitive surface (10a) forming at least one isotonic input area (ZI) and elastic abutment means forming at least one passive elastic input area (ZE) that is adjacent to the isotonic input area (ZI).

2.  The input device of claim 1, wherein the elastic abutment means (11) are mounted above the touch-sensitive surface (10a).

3.  The input device of claim 1 or 2, wherein the elastic abutment means (11) are mounted on the periphery of the touch-sensitive surface (10a).

4.  The input device of any one of claims 1 to 3, wherein the elastic area (ZE) forms a ring.

5.  The input device of claim 4, wherein the elastic area (ZE) is a circular ring.

6.  The input device of any one of claims 1 to 5, wherein the elastic abutment means (11) comprise an abutment (110) that is elastically deformable.

7.  The input device of any one of claims 1 to 5, wherein the elastic abutment means (11) comprise a mobile abutment (110') that is fastened to a support (S) by elastic fastening means (111).

8.  The input device (1) of any one of claims 1 to 7, comprising sensing means (12) for measuring a force exerted on the elastic abutment means (11).

9.  The input device of any one of claims 1 to 8, further comprising electronic control means for performing a position control in the at least one isotonic input area (ZI) formed by the touch-sensitive surface (10a) and for performing a rate control in the at least one elastic area (ZE) delimited by the elastic abutment means (11).

10.  The input device of claim 9, wherein the electronic control means are designed for computing an angular speed at the entrance of the rate control elastic area (ZE), by using the following equation :

$$J\frac{d\overline{\omega}}{dt} - \mu\,\overline{\omega} = \overline{ON} \wedge \overline{NP}$$

where :

   - $\overline{\omega}$ is a rotation vector,
   - $J$ is a moment of inertia,
   - $\mu$ is a friction term added to avoid instability,
   - O is the center of the position control isotonic input area (ZI),
   - N is the transition point at the boundary between the position control isotonic input area (ZI) and the rate control elastic input area (ZE),
   - P is the current position of the user's finger (f) or pointing tool (T) in the elastic area (ZE).

11.  The input device of claim 10, wherein the electronic control means are designed for computing a mixed velocity $V_t$ in the elastic area (ZE) by using the following equation :

$$V_t = \left(V_0 \cdot e^{-At} + K \cdot NP \cdot (1 - e^{-At})\right)\frac{\overline{NP}}{NP}$$

where :

   - $V_o$ is the linear speed of the user's finger (f) or pointing tool (T) at the exit of the isotonic area (ZI),
   - $t$ is the time after the exit of the isotonic area (ZI),
   - A is a constant to adjust the mixing time,
   - K is constant.

12.  Electronic apparatus (EA), in particular PDA, laptop computer, or handheld tablet, comprising the input device (1) of any one of claims 1 to 11.

FIG.1

FIG.4

1

S          11          110
          10a
                          110
11a              110a
ZE        ZI    10    ZE

FIG.3

ZE              110
              110a        10a

III    ZI    III

FIG.2

10

**(a) Device**

**(b) Display**

## FIG. 5

## FIG. 6

**(a) Device**

**(b) Display**

## FIG. 7

FIG.8

EP 2 045 697 A1

FIG.9

Fig 10

12

**European Patent Office**

**EUROPEAN SEARCH REPORT**

Application Number

EP 07 37 0020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 720 092 A (UNIV LILLE SCIENCES TECH [FR]) 8 November 2006 (2006-11-08) * abstract; figures 5-11 * * paragraphs [0011] - [0024], [0050] - [0062] * ----- | 1-12 | INV. G06F3/041 |
| A,D | DOMINJON L ET AL: "The Bubble Technique: Interacting with Large Virtual Environments Using Haptic Devices with Limited Workspace" HAPTIC INTERFACES FOR VIRTUAL ENVIRONMENT AND TELEOPERATOR SYSTEMS, 2005. WHC 2005. FIRST JOINT EUROHAPTICS CONFERENCE AND SYMPOSIUM ON PISA, ITALY 18-20 MARCH 2005, PISCATAWAY, NJ, USA,IEEE, 18 March 2005 (2005-03-18), pages 639-640, XP010781897 ISBN: 0-7695-2310-2 * the whole document * ----- | 1-12 | |

TECHNICAL FIELDS SEARCHED (IPC)

G06F

The present search report has been drawn up for all claims

| Place of search | Date of completion of the search | Examiner |
|---|---|---|
| Munich | 13 February 2008 | Pfaffelhuber, Thomas |

EPO FORM 1503 03.82 (P04C01)

**ANNEX TO THE EUROPEAN SEARCH REPORT
ON EUROPEAN PATENT APPLICATION NO.**

EP 07 37 0020

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2008

| Patent document cited in search report | | Publication date | Patent family member(s) | | Publication date |
|---|---|---|---|---|---|
| EP 1720092 | A | 08-11-2006 | CA | 2606534 A1 | 09-11-2006 |
| | | | WO | 2006117180 A1 | 09-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5521336 A
- US 4529959 A
- US 4455 A
- US 450 A
- US 4736190 A
- US 4455450 A

### Non-patent literature cited in the description

- **ZHAI, S. HUMAN.** *Performance in Six Degree of Freedom Input Control. PhD thesis,* 1995
- **BUXTON, W.** Lexical and Pragmatic Considerations of Input Structures. *Comp. Graphics,* 1983, vol. 17 (1), 31-37
- **CARD, S. K. ; MACKINLAY, J. D. ; ROBERTSON, G. G.** A morphological analysis of the design space of input devices. *ACM Trans. Inf. Syst.,* 1991, vol. 9 (2), 99-122
- **JELLINEK, H. ; CARD , S.** Powermice and user performance. *Proc. of CHI'90,* 1990, 213-220
- **ACCOT, J. ; ZHAI, S.** Scale effects in steering law tasks. *Proc. of CHI'01,* 2001, 1-8
- **ZHAI, S.** *Human Performance in Six Degree of Freedom Input Control. PhD thesis,* 1995
- **CARD, C. ; ENGLISH, W. ; BURR, B.** Evaluation of mouse, rate controlled isometric joystick, step keys, and text keys for text selection on a crt. *Ergonomics,* 1978, vol. 21, 601-613
- **DOUGLAS, A. ; MITHAL, A.** The effect of reducing homing time on the speed of a finger-controlled isometric pointing device. *Proc. of CHI'94,* 1994, 411-416
- **DOMINJON, L. ; LÉCUYER, A. ; BURKHARDT, J.M. ; ANDRADE-BARROSO, G. ; RICHIR, S.** The bubble technique: Interacting with large virtual environments using haptic devices with limited workspace. *Proc. of IEEE World Haptics,* 2005, 639-640
- **PLAMONDON, R. ; ALIMI, A. M.** Speed/accuracy tradeoffs in target-directed movements. *Behavioral and Brain Sciences,* 1997, vol. 20, 279-349
- **KRUGER, R. ; CARPENDALE, S. ; SCOTT, S. D. ; TANG, A.** Fluid integration of rotation and translation. *Proc. of CHI '05,* 2005, 601-610
- **BEAUDOUIN-LAFON, M.** Novel interaction techniques for overlapping windows. *Proc. of UIST '01,* 2001, 153-154